# EUROPEAN PATENT SPECIFICATION

(11) **EP 3 572 380 B1**
(45) Date of publication and mention of the grant of the patent: **16.03.2022**
(21) Application number: 18742087.2
(22) Date of filing: 16.01.2018
(51) Int. Cl.: A01G 9/12, A01G 31/02, C02F 3/32

(54) **SYSTEM AND METHOD FOR IMPLANTING, EXTRACTING AND/OR OPERATING PHYTOREMEDIATION PLANT FILTERS FOR WASTEWATER**
SYSTEM UND VERFAHREN ZUR IMPLANTATION, EXTRAKTION UND ZUM BETRIEB VON PHYTOREMEDIATIONSPFLANZENFILTERN FÜR ABWASSER
SYSTÈME ET PROCÉDÉ D'IMPLANTATION, D'EXTRACTION ET/OU DE FONCTIONNEMENT DE FILTRES VÉGÉTAUX DE PHYTOREMÉDIATION D'EAUX RÉSIDUAIRES

(30) Priority: 17.01.2017 ES 201730049
(43) Date of publication of application: 27.11.2019
(73) Proprietor: Asociación Ria, 39600 Muriedas - Camargo (ES); Cicero Fernández, Diego, 39574 Frama - Cabezón de Liébana (ES)
(72) Inventor: CICERO FERNÁNDEZ, Diego, 39574 Frama - Cabezón de Liébana (ES)
(74) Representative: Tribalyte Ideas
(86) International application number: PCT/ES2018/070031
(87) International publication number: WO 2018/134459

(56) References cited:
- ES-A1- 2 120 388
- ES-A1- 2 331 556
- ES-A1- 2 448 040
- ES-A2- 2 324 277
- US-A1- 2014 202 954
- US-B1- 7 776 216

## Description

### FIELD OF THE INVENTION

The present invention is comprised in the technical field corresponding to the sector of the urban, agricultural and industrial wastewater treatment. More specifically, the invention relates, without limitation, to the treatment of wastewater generated in small urban areas or in isolated sites. The invention can also be applied to the treatment of eutrophic effluents; the treatment of effluents with pollutants that can be removed by plant species with phytoremediation capacity; and the restoration and creation of wetlands and other aquatic habitats. More specifically the invention relates to a system for installing, removing and operating phytoremediation plant filters for wastewater, suitable for use in a constructed wetland. The invention also relates to a method fo treating wastewater by means of phytoremediation plant filters in a constructed wetland.

### BACKGROUND OF THE INVENTION

In the technical field of urban wastewater, agricultural and industrial treatment, there are techniques referred to as "unconventional", "extensive" or "natural soft systems". Among these techniques, the ones that stand out are based on "phytoremediation", that is, the use of vegetative elements (algae or plants) for treating water, also referred to as "phytosystems" or "phytopurification system". Phytoremediation systems can be particularly advantageous from a socioeconomic and environmental perspective, in particular for providing service in cases which have still not been managed in an efficient and sustainable manner, such as wastewater generated in a large number of small urban areas (fewer than 2000 equivalent population). This is also the case with wastewater generated by activities that are often isolated and not integrated in populated areas such as rural accommodations, restaurants and other hotel and catering businesses or industries commonly located in rural areas, such as, for example: processing plants in the dairy, liquor and food product sectors; agricultural and livestock farms or different types of industrial activities such as mining. However, at present the aforementioned wastewater still lacks systems for collection and treatment that are appropriate and suited to the physical, chemical and microbiological features of its effluents, and it also lacks channels for the specific adaptation to the type of locations where it is found.

Additionally, the sensitivity, the high ecological and landscape value of the environment receiving the polluting effluents, the high degree of dispersion of wastewater emitting sources in the territory, the small size of such sources in many cases, and the diverse types thereof, are the main factors which complicate and often make the implementation of conventional treatment infrastructures unfeasible. Likewise, the limited economic resources of both public and private entities for taking on the high costs associated with said infrastructures are also factors which limit the implantation thereof. It has become, therefore, essential to determine more sustainable, effective, efficient, versatile and environmentally friendly alternatives that improve the known technologies.

Among water phytoremediation techniques, constructed wetlands with emergent heliophytes or macrophytes (genera: Phragmites, Typha or Sparganium, among others) have been proven effective, efficient and of lowest cost, and they are widespread at present. All constructed wetlands with macrophyte plants for water treatment consist of pre-treatment infrastructures and lagoons or canals that are usually waterproofed, where plants are placed to form a plant cover with root systems and associated microorganisms that act by breaking down and purifying the pollutants in the circulating water.

Floating and half-immersed heliophyte systems constitute the two most advantageous and competitive alternatives today. These plants or plant filters -these two terms will be used as synonyms in this document-, depending on the type, require both specific plant densities and the immersion thereof at specific depths for optimal operation. To meet this need, treatment systems for wastewater of this type have been designed, such as those described in patent applications ES 2530762 B1 and ES 2490515 B1, as well as in US 7776216 B1.

Patent ES 2490515 B1 discloses a modular system intended for water treatment by means of phytoremediation through plant filters with macrophyte plants. The system comprises a plurality of coupled modules arranged collaterally and floating on the water. In this case, the system cannot be regulated in relation to immersion depth and flotation occurs because of the low-density material from which the modules are made. The modules have vessels arranged therein where the plant filters are fixed. This system cannot regulate the plant density either because it is already determined by the design of the modules. This limits the type of plants used to just one. Furthermore, the system can lose flotation or original depth due to changes in the environment, such as, for example, heavy snowfall increasing the weight of the cover. Lastly, the cover has to be dismantled for maintenance and cleaning, for which specialized personnel must be used.

As an alternative, patent ES 2530762 B1 discloses a structural support module for heliophytes for wastewater treatment, configured to be completely immersed in water to a determined depth. Said module comprises a framework with openings and open containers fixed in the vertical position in said openings. The use of metal framing squares anchored directly to the framework, which are in turn screwed to the walls of the treatment canal or lagoon by means of lag screws, allows the installation unit to be fixed at a specific height. However, said document proposes a system in which the position of said main beams is always fixed, and in which it is possible to remove the plant filters housed in the rods by means of uninstalling the entire system.

Although known phytoremediation systems allow certain needs of plant filters for wastewater treatment to be solved, they are still not exempt of the technical problem of providing a system for installing, removing and/or operating phytoremediation plant filters for wastewater which allows an easy implantation at the required depth of the plant filters to achieve optimal operation, maintaining the suitable depth even when the plant cover differs in total mass over time (for example, a change in mass caused by heavy snowfall), in addition to allowing the use of more than one type of plant filters, which allows the variation of the plantation density to that end, and all of which is additionally reversible without the need for a complete reinstallation in a clean and easy manner.

In addition, a worker cannot access and walk on existing phytoremediation systems. Periodical maintenance tasks like aerial biomass periodical harvesting must be done from the margins of the waterbody, what limits shape and dimension of the systems, commonly restricted to channels no wider than three meters. This is one of the main limitations for existing floating or semi submerged constructed wetland systems, as they need a lot of space to hosting water channels as well as access embankments or dikes between them.

A further problem of the known techniques is that they do normally not allow workers to access and walk over the treatment system for maintenance and operation thereof, due to lack of floatability or proper means of support for the workers over the system. This, in practice, severely restricts the size and shape of the constructed wetlands and, thus, their scalability.

With the limitations described in the preceding paragraphs, there is a need in the present technical field to provide a system for treating wastewater through phytoremediation processes, with an efficiency in installing, removing and/or operating, cleaning and maintenance which improves the known solutions from the state of the art. Furthermore, the system is required to offer at the same time substantial advantages in terms of sustainability and economic competitiveness, which is particularly important in the wastewater treatment in small populations or small installations where limited economic resources make it complicated to install and maintain water treatment infrastructures.

For this purpose, the present invention thus proposes an extractable system for treating wastewater by phytoremediation conceived, without limitation, for being installed in treatment systems in small populations or small installations, the technical embodiment of which allows the problems described in detail above to be overcome.

### BRIEF DESCRIPTION OF THE INVENTION

An object of the present invention preferably relates to the development of a system as defined in claim 1 for installing, removing and/or operating phytoremediation plant filters for wastewater, suitable for use in a constructed wetland, which comprises:
- A main support beam configured to be partially or completely immersed in the constructed wetland (where the expression "partially immersed" shall refer in this context to the fact that the main support beam is at least in contact with the water and/or floating on it).
- A plurality of securing rods that are arranged as means for fixing the plant filters and connected to the main support beam.

The system further comprises at least one swinging frame connected with the rods and the main beam. The system also comprises floating elements connected to the main beam and turning clamps, as defined in claim 1.

In a preferred embodiment of the invention, the system also comprises a support pivot for supporting on the ground that is substantially vertical, which is connected to the main support beam and comprises rotating means in relation to a main shaft, for removing the main support beam, permanently or from time to time, when the filter or the system is to be operated, to a region outside the constructed wetland. This achieves extraction, that can be both automatic and manual, of the plant filters for maintenance and/or cleaning without dismantling the system, and the plant filters thereby suffer minimal stress, improving in terms of speed and simplicity the known systems from the state of the art.

In a preferred embodiment of the invention, the spacing of the rods of the system, in their connection to the main support beam, can be regulated to be adapted to the type of plant filters used. This achieves the adaptation of the plant filter density to the specific type of plant filters. Moreover, by configuring the rods with more than one single spacing, there is offered a way to install more than one type of plant filters with different optimal densities.

In a preferred embodiment of the invention, the system further comprises a secondary securing bar and/or one or more support braces as a structural reinforcement.

In a preferred embodiment of the invention, the pivot is releasable from the footing and from the main beam. This achieves arranging the main beam separated from the pivot if said main beam is to be replaced with a new one or the plant filters are to be brought closer to the shore of the wetland. Therefore, the support pivot and the rotating means for removing the system to a region outside the wetland may not be permanently fixed to the main support beam. Preferably, the support pivot and the rotating means will be integrated in a loading arm or a lifting device and releasably connected to the main support beam when hoisting of the system is required.

In a preferred embodiment of the invention, the support pivot can be regulated in height, such that the system is configurable between at least:
- a first position with the beam immersed in the constructed wetland;
- a second position with the beam above the water level of the wetland;
- a third position with the beam half-immersed in the wetland.

This achieves adapting the depth of the plant filters to the needs of each type for optimal wastewater phytoremediation. Moreover, in the event of possible changes in the surrounding area, the depth at which the plant filters can be found can be rectified, thus preventing damage to the health of the plant filters.

In a preferred embodiment of the invention, the main shaft of the rotating means for extracting the main support beam to a region outside the constructed wetland is a substantially vertical shaft or a substantially horizontal shaft for providing, respectively, a horizontal or vertical movement on said main beam. This achieves being able to remove the plant filters in two different configurations, as needed.

In a preferred embodiment of the invention, the system further comprises secondary means for fixing or securing plant filters connected to the main beam and/or to the rods.

Another object of the present invention relates to a wastewater treatment facility comprising at least one constructed wetland, where there are housed one or more systems for installing, removing and/or operating phytoremediation plant filters for wastewater, according to any of the embodiments described herein.

Also, an object of the present invention is a method for treating wastewater by means of phytoremediation plant filters in a constructed wetland, which is performed by means of a system or a facility according to any of the embodiments described herein. Advantageously, said method comprises performing the following steps:
- the plant filters are fixed to the rods of the system;
- the beam with the rods and the plant filters is immersed in the constructed wetland;
- the plant filters are kept completely or partially immersed (for example, floating and in contact with the water) for a period of time to perform phytoremediation on the wastewater.

Preferably, the method for treating wastewater may additionally comprise the step of removing the rods and plant filters from the wetland to a region outside same to perform maintenance on the plant filters. This achieves being able to perform maintenance and/or cleaning operations on the plant filters and on the system from outside the water, without requiring an operator to get into the wetland to that end. All this is performed subjecting the plant filters to minimal stress.

More preferably, the method for treating wastewater may comprise an additional step wherein, with the rods and the plant filters in the inner region of the wetland, the existing biomass is removed from the wetland. This achieves being able to remove the biomass without an operator needing to get in the wetland to that end and without the risk of part of the biomass falling into the water.

More preferably in addition to the steps of removing, cleaning plant filters and removing biomass, the method for treating wastewater may comprise a step in which maintenance operations are performed in the wetland. This achieves facilitating cleaning the wetland without damaging the plant filters, since they are far enough away from the wetland in this step.

In a preferred embodiment of the invention, the method for treating wastewater may comprise successive steps in which the spacing of the plants on the rods is adjusted so as to adapt the density of the plant filters to better plant filtration for the wastewater. This achieves being able to change the plant filter density once the plant filters are installed in the system when the density of the plant cover experiences changes without having to put the filters back in place one by one.

In a preferred embodiment of the invention, the method for treating wastewater may comprise successive steps in which the height of the pivot is adjusted so as to adapt the height of the plant filters in relation to the surface of the water of the wetland according to the features of the water to be treated and the type of plant filters. This achieves being able to correct the depth of the plant filters in the wetland for the phytoremediation to be optimal at all times.

In a preferred embodiment of the invention wherein the plant filters consist of macrophyte plants found in nature with aerenchyma (air pockets in their tissues), the method for treating wastewater may comprise successive steps in which the height of the pivot is adjusted automatically during episodes for increasing the circulating flow rate and the water level as a result of the upward thrust exerted by the air pockets conferring a low density to the tissues of the plant filters with respect to the weight of the system for installing, removing and/or operating.

In an embodiment outside of the scope of the invention in which the system comprises a second support beam connected to a second plurality of rods in the form of a grid or comprises one or more swinging frames (equipped with a net for example), the method for treating wastewater may comprise an additional step in which the above-ground part of the plants is cut to a level above the surface of the grid or the swinging frames (for example by means of machinery provided with a pole for working from outside the wetland as hedge trimmers or height pruners) and the second support beam is extracted to a region outside the wetland by means of the vertical swinging of said beam to harvest the above-ground biomass of the plant filters, or similarly, the swinging frames swing towards a region outside the wetland. As the second support beam or the swinging frames are lifted, once the plumb axis is exceeded, the above-ground biomass falls due to gravity and is deposited directly on the auxiliary surface of the edge of the lagoon or canal or in a trailer, cart or device for transporting the biomass. This achieves removing the above-ground biomass in a simple manner independently of removing the main beam, which prevents having to remove the plant filters if no further maintenance and/or cleaning operations are necessary.

The invention thus enables the proposal of a solution for wastewater treatment through a system, facility and method for treating water by phytoremediation, with the system having dimensions that are perfectly scalable to be adapted to the needs of any case by means of enlarging the size of the system and/or by means of increasing the number of treatment systems arranged in series. The invention enables performing the different phases of installing the plant filters and treating wastewater. The invention additionally enables regulating the depth of the plant filters as well as varying the density of the plant cover. The invention enables removing the system and, preferably, cleaning and/or performing maintenance operations of the plant filters and dumping the above-ground biomass in a region outside the constructed wetland. This allows performing maintenance on said system in a clean and simple manner without polluting the water object of treatment with biomass. This also achieves that the operator in charge of maintenance does not come into contact with the substances to be treated or physically get into the infrastructures for said maintenance. The invention is particularly functional and suitable for small sized treatment systems managed by entities that want to run an operation with its own non-specialized personnel in a sustainable manner.

### DESCRIPTION OF THE FIGURES

Figure 1 shows a plan view of the system for treating wastewater in the position with the beam in the wetland according to an embodiment outside of the scope of the invention.
Figure 2 shows a profile view of the system for treating wastewater in the position with the beam in the wetland according to an embodiment outside of the scope of the invention.
Figure 3 shows a plan view of the system for treating wastewater in the position with the beam in a region outside the wetland according to an embodiment outside of the scope of the invention.
Figure 4 shows a profile view of the system for treating wastewater in the position with the beam half-immersed in the wetland according to an embodiment outside of the scope of the invention.
Figure 5 shows a profile view of the system for treating wastewater in the position with the beam out of the wetland according to an embodiment outside of the scope of the invention.
Figure 6 shows a profile view of the system for treating wastewater in the position with the beam in a region outside the wetland according to an embodiment outside of the scope of the invention.
Figures 7A-7D show plan and profile views of a system for treating wastewater with a vertical turning mechanism compatible with another horizontal turning mechanism according to an embodiment outside of the scope of the invention.
Figures 8A-8C show views of a system for treating wastewater wherein the main beam supports a plurality of modules comprising swinging frames and floating elements according to a preferred embodiment of the invention.
Figures 9A-9E show views of a system for treating wastewater with two swinging frames, floating elements, pass-through connector elements, a secondary connecting bar and connecting braces, according to a preferred embodiment of the invention.
Figures 10A-10C show views of a system for treating wastewater with two swinging frames, floating elements and a rope or cable connected to the footing according to a preferred embodiment of the invention.

### REFERENCE NUMBERS USED IN THE FIGURES

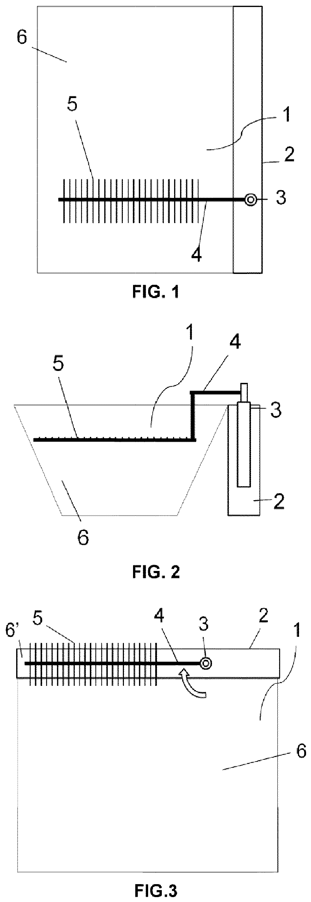

For the purpose of helping to better understand the technical features of the invention, said Figures 1-10 are accompanied by a series of reference numbers where the following is depicted in an illustrative and non-limiting manner:

| | |
|---|---|
| (1) | System for installing, removing and/or operating plant filters |
| (2) | Footing |
| (3) | Support pivot |
| (4) | Main support beam |
| (4') | Second support beam |
| (5) | Plurality of rods |
| (5') | Plurality of rods in the form of a grid |
| (5") | Swinging frames |
| (6) | Constructed wetland |
| (6') | Region outside the wetland |
| (7) | Swinging module |
| (8) | Pin and vertical turning shaft |
| (9) | Pass-through connector elements |
| (10) | Secondary securing bar |
| (11) | Support braces |
| (12) | Floating elements |
| (13) | Turning clamps |
| (14) | Hoisting hook |
| (15) | Connecting cable/rope |

### DETAILED DESCRIPTION OF THE INVENTION

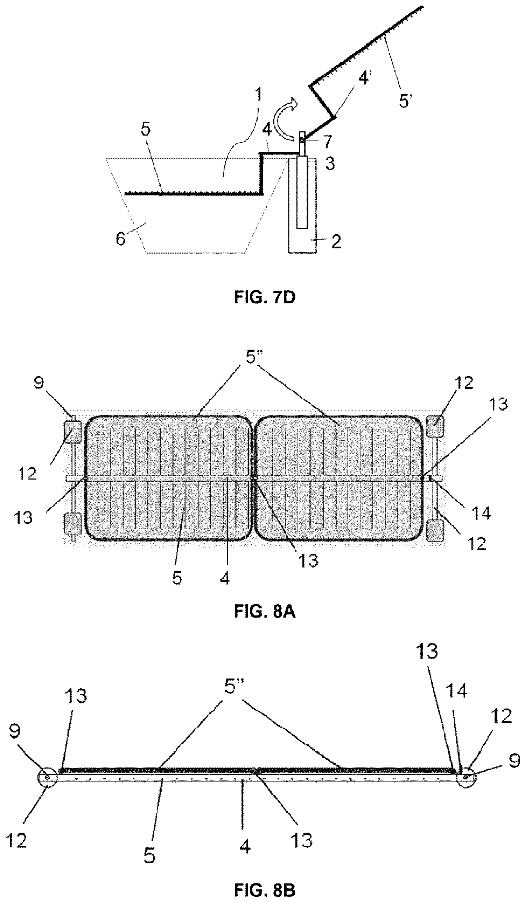

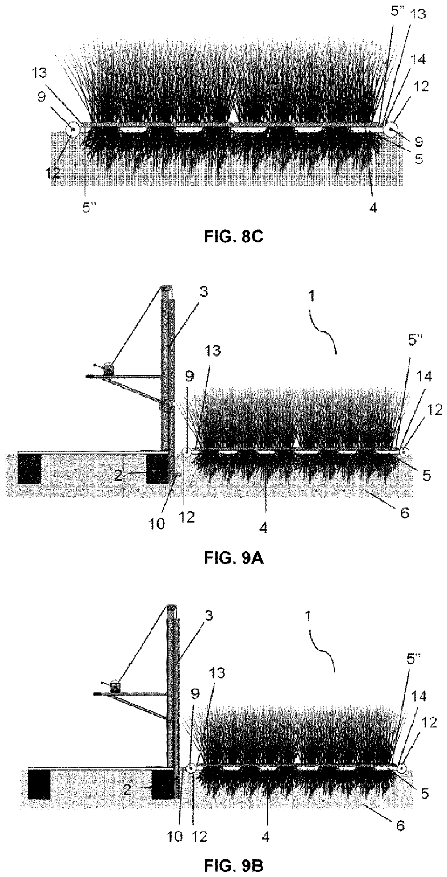

Exemplary embodiments falling either outside of the scope of the invention (Figures 1-7) or within the scope of the invention (Figures 8-10) are described below for the purpose of understanding the invention but not limiting it. Figures 1-10 describe a system (1) for treating wastewater comprising: a footing (2) by way of a foundation of the system (1), a support pivot (3) for supporting same on the footing (2), a main support beam (4) and a plurality of securing rods (5) for securing plant filters or plants.

The system (1) for treating wastewater is suitable for use in a canal, lagoon or constructed wetland (6). More specifically, described below are the elements for the treatment system according to that shown in Figures 1-10:
- A foundation footing (2) in which the support pivot (3) is arranged or anchored. Said foundation can be built, for example, by laying concrete.
- A support pivot (3) the height of which can preferably be regulated through a hydraulic, pneumatic, mechanical or electromechanical mechanism for example which rotates with respect to a main shaft for removing the main support beam (4) to a region (6') outside the constructed wetland (6).
- A main support beam (4) connected to the pivot (3) configured to be partially or completely immersed in the wetland (6). Said beam (4) can be bent at two or more points to overcome the edge of the wetland (6), or in other embodiments it can be continuous or articulated.
- A plurality of securing rods (5) connected to the main beam (4), the spacing of which can preferably be regulated and used for the fixing and development of the plants or plant filters.

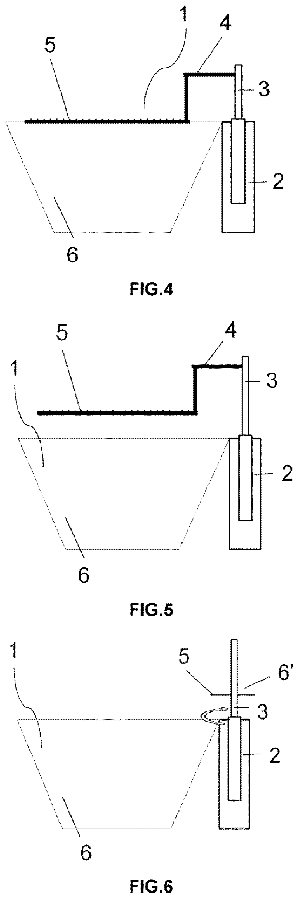

A description of the operation of the extractable system (1) for treating the corresponding wastewater is described in detail below:
For proper operation of the treatment system (1), firstly, the plants must be fixed thereto. The plants can be fixed to the rods (5) in different ways depending on the format in which the plants are supplied. In a preferred embodiment of the invention, the plants are laterally threaded on the rods (5), going through the root ball or by intertwining rhizomes between contiguous rods (5). This fixing is preferably performed in a region (6') outside the wetland (6) as shown, for example, in Figures 3 and 6.

In a preferred embodiment of the invention, the plantation density is variable through the spacing of the rods (5) that can be regulated, depending on the requirements of the species to be used or the particularities of the water mass to be treated. In a preferred embodiment of the invention, for greater security, the plants can be fixed to the structure with wire, rope or similar materials or elements.

The plants form a plant cover once they are fixed to the rods (5). The securing rods (5) are connected to the main support beam (4) which in turn is welded to the support pivot (3) arranged in the footing (2). A hydraulic, pneumatic, mechanical or electromechanical mechanism regulates the height of the pivot (see Figures 2, 4 and 5 for example). Furthermore, the pivot (3) is preferably rotational, and more preferably allowing a turn of up to 360 degrees with respect to its main shaft (said shaft being, in this embodiment, a vertical shaft). By means of this mechanism, it is possible to rotate the pivot (3) for placing the beam (4) supporting the cover above the wastewater (Figure 5) and then partially or completely immersing the cover in the wetland (6) (Figure 2).

Preferably, for periodic maintenance of the plant cover, the latter is extracted from the wetland (6). The extraction process occurs inversely to the immersion process: first the beam (4) is extracted by regulating the height of the pivot (3) and, then the pivot (3) is rotated horizontally to deposit the beam (4) out of the wetland (6) (Figure 6).

Maintenance tasks such as: cutting, harvesting, repair planting and removal of biomass, take place out of the wetland (6) without modifying the position of the cover, thus subjecting the plants to minimal stress and at the same time protecting the water from the unwanted falling of biomass.

Optionally, once the main beam (4) with the cover is extracted, the free end thereof can be supported on a custom trestle. Likewise, the lifting and regulation of the height of the pivot (3) can be done manually or through a motor-powered apparatus.

Optionally, in a preferred embodiment of the invention wherein the plant filters consist of macrophyte plants found in nature with aerenchyma (air pockets in their tissues), the height of the pivot (3) can be adjusted automatically in successive steps during episodes for increasing the circulating flow rate and the water level as a result of the upward thrust exerted by the air pockets of said macrophyte plants conferring a low density to the tissues of the plant filters with respect to the weight of the system (1) for installing, extracting and/or operating.

Alternatively, two or more spacings of the rods (5) can be combined to obtain a plant cover of different species, adapting the spacings to the needs of the plants of interest and achieving optimization of the phytoremediation process, or enlarging the spectrum of types of wastewater that can be treated.

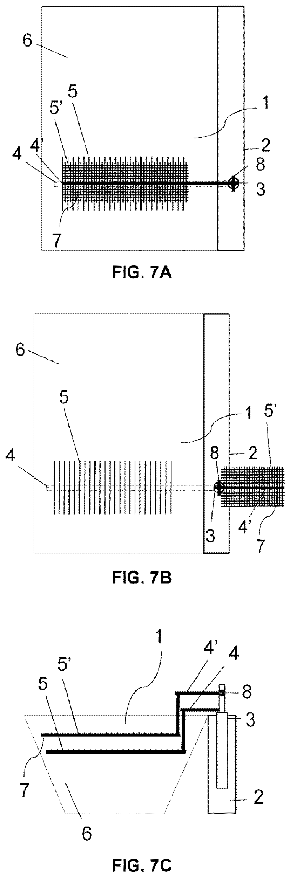

A system (1) outside of the scope of the invention in which a swinging module (7) is included to harvest above-ground biomass is shown schematically in Figures 7A-7D of the present document. Said module (7) comprises a second support beam (4') arranged in a region above the main beam (4) of the system (1), preferably having a fixing point for being fixed to the pivot (3) by way of a pin (8) and working at the same time as a vertical turning shaft to enable said second beam (4') to swing, allowing the insertion or extraction thereof into/from the water mass.

At its distal end, the second beam (4') preferably has a ring or similar engagement means (not shown in the figures) from which there emerges a fixing element (cable, wire, rod, etc.) for fixing to the main support beam (4). This ring is furthermore used to fix other contiguous second beams (4') with a pass-through bar going from ring to ring, which thus allows lifting several or all of the swinging modules (7) from a canal or wetland (6) simultaneously.

In different additional embodiments of the invention, attached (for example, by means of pass-through connectors (9)) to the main beam (4) it is possible to, optionally, arrange one or more secondary securing bars (10) with two functions in the standby state: providing structural reinforcement to said beam (4') and being used as a point for supporting and/or hoisting said main beam (4). Alternatively, in other embodiments of the invention the secondary securing bars (10) can be fixedly or releasably connected to the main beam (4).

In other embodiments of the invention, there is also seated on the main beam (4) a second plurality of rods in the form of a grid (5') and/or polygonal cells having a size suitable for allowing stem and leaf growth through the grid (5'), spaced such that the leaves and biomass fragments are retained on same when they fall naturally or when cutting or pruning are performed.

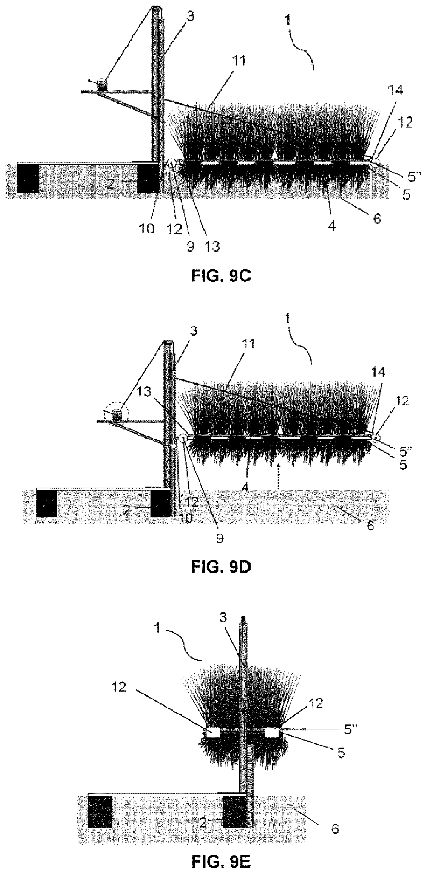

In another preferred embodiment of the invention, the pivot (3) can be uncoupled or is releasable from the footing (2) and/or also from the main beam (4). The main beam (4) can be connected to the pivot (3) through pass-through connector elements (9) (as well as other similar connection elements, either in a fixed or releasable manner), as can be seen in Figures 9A-9E.

In this preferred embodiment, the pivot (3) is connected to the beam (4) through a connection formed by a secondary securing bar (10) (Figure 9C) and pass-through connector elements (9) which allow coupling and uncoupling said secondary securing bar (10) to/from the main beam (4). Likewise, the main beam (4) can furthermore be connected to the pivot (3) through one or more support braces (11) (Figure 9C) which will be used to keep the main beam in one or more positions, or to provide stability to same during operations for hoisting the filters.

Even more preferably, the height of the secondary securing bar (10) and/or the main beam (4) can be regulated by means of a hoisting system with cables and/or ropes and/or capstans (Figure 9D).

In a preferred embodiment of the invention (see Figures 8A-8C, 9A-9E and 10A-10C), the system (1) comprises one or more swinging frames (5") connected with the main beam (4) and the rods (5) and it comprises floating elements (12) configured to ensure that the main beam (4) and the swinging frames (5") remain partially immersed. The swinging frames (5") have the function of arranging the stems of the plant filters in a specific orientation and preventing the above-ground biomass from falling into the wetland, being retained on said swinging frames. The above-ground biomass can thereby be separated at the time that it is generated.

Preferably, the swinging frames (5") have turning clamps (13) (Figure 8A-8C). More preferably, the main beam (4) has a hoisting hook (14) to which the support braces (11) can be connected.

In a preferred embodiment of the invention based on floating elements (12), the pass-through connector elements (9) coupling the main beam (4) to the secondary securing bar (10) go through said elements.

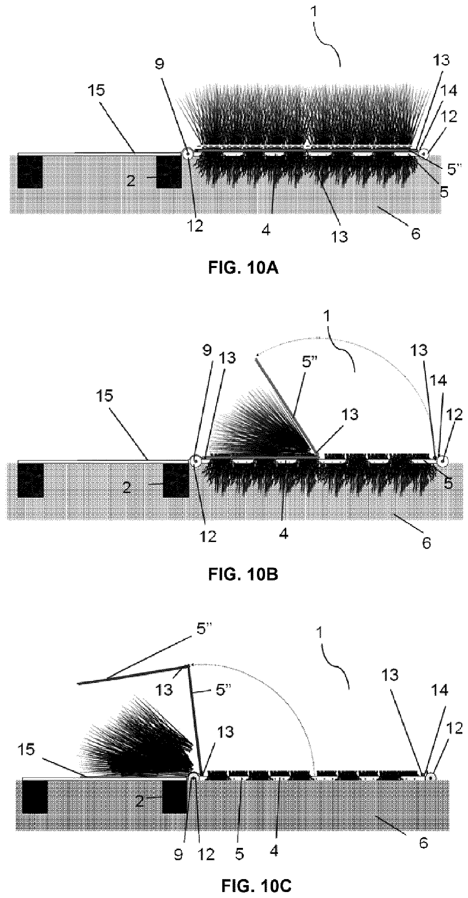

In a preferred embodiment of the invention, with the main beam (4) uncoupled from the pivot (3), the main beam (4), the rods (5) and the swinging frames (5") can be drawn together towards the region outside the constructed wetland (6), being held through a connecting cable or rope (15), after which the plant filters can be cut (Figures 10A-10C). By means of the swinging of the swinging frames (5") towards the region outside the constructed wetland (6), biomass can be collected.

Another object of the invention relates to a wastewater treatment facility comprising at least one constructed wetland (6) where there are housed one or more systems (1) according to any of the embodiments described herein.

## Claims

1. A system (1) for installing, removing and operating phytoremediation plant filters for wastewater, suitable for use in a constructed wetland (6), which comprises:
- a main support beam (4) configured to be partially or completely immersed in the constructed wetland (6);
- a plurality of securing rods (5) that are arranged as means for fixing the plant filters and connected to the main beam (4); and
**characterized in that** the system (1) also comprises:
- at least one swinging frame (5") connected with the main support beam (4) and the securing rods (5) and arranged thereabove, so as to separate above-ground biomass from the wetland (6), and where the swinging frame (5") and the main support beam (4) are connected by means of turning clamps (13) adapted such that the swinging frame (5") can swing with respect to the main support beam (4);
- one or more floating elements (12) connected to the main support beam (4).

2. The system (1) according to the preceding claim, wherein the swinging frame (5") has the function of preventing the above-ground biomass from falling into the wetland by retaining it on said swinging frame (5").

3. The system (1) according to any of the preceding claims, wherein the main support beam (4) comprises a hoisting hook (14) to which support braces (11) can be connected.

4. The system (1) according to any of the preceding claims, further comprising:
- a support pivot (3) for supporting on the ground that is substantially vertical, which is connected to the main support beam (4) and comprises rotating means in relation to a main shaft, for extracting the main support beam (4) to a region (6') outside the constructed wetland (6).

5. The system (1) according to any of the preceding claims, wherein the spacing of the rods (5) in their connection to the main support beam (4) can be regulated to be adapted to the type of plant filters used.

6. The system (1) according to any of the preceding claims, further comprising a secondary securing bar (10) and/or one or more support braces (11) connected to the main beam (4) and to the pivot (3).

7. The system (1) according to any of the preceding claims, wherein the secondary securing bar (10) and/or the support braces (11) are releasable.

8. The system (1) according to any of the preceding claims, wherein the pivot (3) is releasable from the footing (2) and/or from the main beam (4).

9. The system (1) according to claim 4, wherein the support pivot (3) can be regulated in height, such that the system is configurable in:
- a first position with the beam (4) immersed in the constructed wetland (6);
- a second position with the beam (4) above the water level of the wetland (6); and/or
- a third position with the beam (4) half-immersed in the wetland (6).

10. The system (1) according to any of the preceding claims, wherein the main shaft of the rotating means for extracting the main support beam (4) to a region (6') outside the constructed wetland (6) is a substantially vertical shaft or a substantially horizontal shaft for providing, respectively, a horizontal or vertical movement on said main beam (4).

11. A wastewater treatment facility comprising at least one constructed wetland (6), wherein one or more systems (1) according to any of the preceding claims are housed.

12. A method for treating wastewater by means of phytoremediation plant filters in a constructed wetland (6), performed by means of a system (1) according to any of claims 1-10 or a facility according to claim 11, and **characterized in that** it comprises performing the following steps:
- the plant filters are fixed to the rods (5) of the system (1);
- the beam (4) with the rods (5) and the plant filters is immersed in the constructed wetland (6);
- the plant filters are kept immersed for a period of time to perform phytoremediation on the wastewater.

13. The method for treating wastewater according to the preceding claim, wherein the rods (5) and the plant filters are additionally extracted from the wetland (6) to a region (6') outside the wetland (6) and plant filter maintenance is performed.

14. The method for treating wastewater according to the preceding claim, wherein:
- with the rods (5) and the plant filters still in the region (6') outside the wetland (6), the existing biomass is removed from the wetland (6);
- maintenance operations are performed in the wetland (6); and/or
- the spacing of the rods (5) is adjusted in successive steps so as to adapt the density of the plant filters to better plant filtration for the wastewater.

15. The method for treating wastewater according to claims 12 -14, wherein, additionally:
- the above-ground part of the plant filters is cut to a level above the surface of the swinging frame (5");
- the swinging frame (5") is swung towards a region (6') outside the wetland (6) to harvest the above-ground part of the plant filters.

## Patentansprüche

1. System (1) zur Installation, Entfernung und zum Betrieb von Phytoremediationspflanzenfiltern für Abwasser, das zum Einsatz in einem bewachsenen Feuchtfeld (6) geeignet ist und Folgendes umfasst:
- einen Hauptträger (4), der zur vollständig oder teilweise eingetauchten Anordnung in dem bewachsenen Feuchtfeld (6) ausgelegt ist;
- eine Vielzahl von Haltestäben (5), die als Vorrichtung zur Befestigung der Pflanzenfilter dienen und mit dem Hauptträger (4) verbunden sind;
**dadurch gekennzeichnet, dass** das System (1) außerdem Folgendes umfasst:
- mindestens einen mit dem Hauptträger (4) und den Haltestäben (5) verbundenen und darüber angeordneten Schwenkrahmen (5") zur Trennung der oberirdischen Biomasse vom Feuchtfeld (6), wobei der Schwenkrahmen (5") und der Hauptträger (4) mittels Drehbefestigungen (13) verbunden sind, die so beschaffen sind, dass der Schwenkrahmen (5") relativ zum Hauptträger (4) schwenkbar ist;
- ein oder mehrere Schwimmkörper (12), die mit dem Hauptträger (4) verbunden sind.

2. System (1) nach vorstehendem Anspruch, wobei die Funktion des Schwenkrahmens (5") darin besteht, die oberirdische Biomasse durch Zurückhalten auf dem genannten Schwenkrahmen (5") am Herabfallen in das Feuchtfeld zu hindern.

3. System (1) nach einem der vorstehenden Ansprüche, wobei der Hauptträger (4) einen Hebehaken (14) aufweist, an den Halterungen (11) angeschlagen werden können.

4. System (1) nach einem der vorstehenden Ansprüche, ferner umfassend:
- eine mit dem Hauptträger (4) verbundene und im Wesentlichen vertikale Drehstütze (3) zur Abstützung auf dem Boden, die eine gegenüber einer Hauptachse drehbare Vorrichtung zum Verbringen des Hauptträgers (4) in einen Bereich (6') außerhalb des bewachsenen Feuchtfelds (6) aufweist.

5. System (1) nach einem der vorstehenden Ansprüche, wobei der Abstand der Stäbe (5) in ihrer Verbindung mit dem Hauptträger (4) zwecks Anpassung an die Art der verwendeten Pflanzenfilter verstellbar ist.

6. System (1) nach einem der vorstehenden Ansprüche ferner umfassend eine sekundäre Sicherungsstange (10) und/oder eine oder mehrere Halterungen (11), die mit dem Hauptträger (4) und der Drehvorrichtung (3) verbunden sind.

7. System (1) nach einem der vorstehenden Ansprüche, wobei die sekundäre Sicherungsstange (10) und/oder die Halterungen (11) lösbar sind.

8. System (1) nach einem der vorstehenden Ansprüche, bei dem die Drehvorrichtung (3) vom Unterbau (2) und/oder vom Hauptträger (4) lösbar ist.

9. System (1) nach Anspruch 4, wobei die Drehstütze (3) höhenverstellbar ist, sodass das System in verschiedene Positionen eingestellt werden kann:
- eine erste Position, in der der Träger (4) in das bewachsene Feuchtfeld (6) eingetaucht ist;
- eine zweite Position, in der der Träger (4) sich über dem Wasserspiegel des bewachsenen Feuchtfelds (6) befindet; und/oder
- eine dritte Position, in der der Träger (4) halb in das Feuchtfeld (6) eingetaucht ist.

10. System (1) nach einem der vorstehenden Ansprüche, bei dem die Hauptachse der Drehvorrichtung zum Verbringen des Hauptträgers (4) in einen Bereich (6') außerhalb des bewachsenen Feuchtfelds (6) eine im Wesentlichen vertikale Achse oder eine im Wesentlichen horizontale Achse zur Erzeugung einer horizontalen bzw. vertikalen Bewegung des genannten Hauptträgers (4) ist.

11. Abwasseraufbereitungsanlage mit mindestens einem bewachsenen Feuchtfeld (6), in der ein oder mehrere Systeme (1) nach einem der vorstehenden Ansprüche enthalten sind.

12. Verfahren zur Abwasseraufbereitung mittels Phytoremediationspflanzenfiltern in einem bewachsenen Feuchtfeld (6), durchgeführt mittels eines Systems (1) nach einem der Ansprüche 1 bis 10 oder in einer Anlage nach Anspruch 11 und **dadurch gekennzeichnet, dass** es die Durchführung der folgenden Schritte umfasst:
- die Pflanzenfilter werden an den Stäben (5) des Systems (1) befestigt;
- der Träger (4) mit den Stäben (5) und den Pflanzenfiltern wird in das bewachsene Feuchtfeld (6) eingetaucht;
- die Pflanzenfilter bleiben eine Zeit lang eingetaucht, um das Abwasser einer Phytoremediation zu unterziehen.

13. Verfahren zur Abwasseraufbereitung nach dem vorstehenden Anspruch, wobei die Stäbe (5) und Pflanzenfilter überdies aus dem Feuchtfeld (6) in einen Bereich (6') außerhalb des Feuchtfelds (6) verbracht werden und eine Wartung der Pflanzenfilter erfolgt.

14. Verfahren zur Abwasseraufbereitung nach dem vorstehenden Anspruch, wobei:
- die vorhandene Biomasse aus dem Feuchtfeld (6) entfernt wird, während die Stäbe (5) und Pflanzenfilter sich noch im Bereich (6') außerhalb des Feuchtfelds (6) befinden;
- im Feuchtfeld (6) Wartungsarbeiten stattfinden; und/oder
- in mehreren Schritten die Abstände der Stäbe (5) so verstellt werden, dass durch Anpassung der Dichte der Pflanzenfilter eine bessere Pflanzenfiltration des Abwassers erfolgt.

15. Verfahren zur Abwasseraufbereitung nach den Ansprüchen 12-14, wobei überdies:
- der oberirdische Teil der Pflanzenfilter auf ein Maß oberhalb der Oberfläche des Schwenkrahmens (5") beschnitten wird;
- der Schwenkrahmen (5") zum Ernten des oberirdischen Teils der Pflanzenfilter in einen Bereich (6') außerhalb des Feuchtfelds (6) geschwenkt wird.

## Revendications

1. Système (1) d'implantation, d'extraction et de fonctionnement des filtres d'usine de phytoremédiation pour les eaux résiduaires, convenant à une utilisation dans une zone humide construite (6), qui comprend:
- une poutre de support principale (4) configurée pour être partiellement ou complètement immergée dans la zone humide construite (6);
- une pluralité de tiges de fixation (5) qui sont disposées comme des moyens de fixation des filtres de plantes et reliées à la poutre principale (4); et
**caractérisé en ce que** le système (1) comprend également:
- au moins un cadre oscillant (5") relié à la poutre de support principale (4) et aux tiges de fixation (5) et disposé au-dessus de celle-ci, de manière à séparer la biomasse aérienne de la zone humide (6), et où le cadre oscillant (5") et la poutre de support principale (4) sont reliés au moyen de pinces tournantes (13) adaptées de telle sorte que le cadre oscillant (5") puisse osciller par rapport à la poutre de support principale (4);
- un ou plusieurs éléments flottants (12) reliés à la poutre de support principale (4).

2. Système (1) selon la revendication précédente, dans lequel le cadre pivotant (5") a pour fonction d'empêcher la biomasse aérienne de tomber dans la zone humide en la retenant sur ledit cadre pivotant (5").

3. Le système (1) selon l'une quelconque des revendications précédentes, dans lequel la poutre de support principale (4) comprend un crochet de levage (14) auquel des entretoises de support (11) peuvent être connectées.

4. Le système (1) selon l'une quelconque des revendications précédentes, comprenant en outre:
- un pivot de support (3) destiné à prendre appui sur le sol qui est sensiblement vertical, qui est relié à la poutre de support principale (4) et comprend des moyens de rotation par rapport à un arbre principal, pour extraire la poutre de support principale (4) vers une région (6') située à l'extérieur de la zone humide construite (6).

5. Le système (1) selon l'une quelconque des revendications précédentes, dans lequel l'espacement des tiges (5) dans leur connexion à la poutre de support principale (4) peut être réglé pour être adapté au type de filtres végétaux utilisés.

6. Le système (1) selon l'une quelconque des revendications précédentes, comprenant en outre une barre de fixation secondaire (10) et/ou une ou plusieurs entretoises de support (11) reliées à la poutre principale (4) et au pivot (3).

7. Le système (1) selon l'une quelconque des revendications précédentes, dans lequel la barre d'arrimage secondaire (10) et/ou les entretoises de support (11) sont libérables.

8. Le système (1) selon l'une quelconque des revendications précédentes, dans lequel le pivot (3) est libérable de la semelle (2) et/ou de la poutre principale (4).

9. Le système (1) selon la revendication 4, dans lequel le pivot de support (3) est réglable en hauteur, de sorte que le système est configurable dans:
- une première position avec la poutre (4) immergée dans la zone humide construite (6);
- une deuxième position avec la poutre (4) au-dessus du niveau d'eau de la zone humide (6); et/ou
- une troisième position dans laquelle le faisceau (4) est à moitié immergé dans la zone humide (6).

10. Le système (1) selon l'une quelconque des revendications précédentes, dans lequel l'arbre principal des moyens de rotation pour extraire la poutre de support principale (4) vers une région (6') à l'extérieur de la zone humide construite (6) est un arbre sensiblement vertical ou un arbre sensiblement horizontal pour fournir, respectivement, un mouvement horizontal ou vertical sur ladite poutre principale (4).

11. Installation de traitement des eaux résiduaires comprenant au moins une zone humide construite (6), dans laquelle sont logés un ou plusieurs systèmes (1) selon l'une quelconque des revendications précédentes.

12. Procédé de traitement des eaux résiduaires au moyen de filtres végétaux de phytoremédiation dans une zone humide construite (6), réalisé au moyen d'un système (1) selon l'une quelconque des revendications 1 à 10 ou d'une installation selon la revendication 11, et **caractérisé en ce qu'**il comprend la réalisation des étapes suivantes:
- les filtres végétaux sont fixés aux tiges (5) du système (1);
- la poutre (4) avec les tiges (5) et les filtres végétaux est immergée dans la zone humide construite (6);
- les filtres végétaux sont maintenus immergés pendant un certain temps pour effectuer une phytoremédiation sur les eaux usées.

13. Procédé de traitement des eaux résiduaires selon la revendication précédente, dans lequel les tiges (5) et les filtres végétaux sont en outre extraits de la zone humide (6) vers une région (6') extérieure à la zone humide (6) et l'entretien des filtres végétaux est effectué.

14. Procédé de traitement des eaux résiduaires selon la revendication précédente, dans lequel:
- les tiges (5) et les filtres végétaux étant toujours dans la région (6') extérieure à la zone humide (6), on retire la biomasse existante de la zone humide (6);
- des opérations d'entretien sont effectuées dans la zone humide (6); et/ou
- l'espacement des tiges (5) est ajusté par étapes successives de manière à adapter la densité des filtres végétaux à une meilleure filtration végétale des eaux usées.

15. Procédé de traitement des eaux résiduaires selon les revendications 12 à 14, dans lequel, en outre:
- la partie aérienne des filtres végétaux est coupée à un niveau supérieur à la surface du cadre pivotant (5");
- le cadre pivotant (5") est pivoté vers une région (6') extérieure à la zone humide (6) pour récolter la partie aérienne des filtres végétaux.
